# EUROPEAN PATENT APPLICATION

(11) **EP 4 235 057 A1**
(43) Date of publication of application: **30.08.2023**
(21) Application number: 20958665.0
(22) Date of filing: 21.10.2020
(51) Int. Cl.: F25B 39/00, F25B 39/02, F25B 39/04, F25B 1/00

(54) **COLD SOURCE UNIT AND REFRIGERATION CYCLE DEVICE**

(71) Applicant: MITSUBISHI ELECTRIC CORPORATION, Chiyoda-ku Tokyo 100-8310 (JP)
(72) Inventor: NAGATA, Ryuichi, Tokyo 100-8310 (JP)
(74) Representative: Pfenning, Meinig & Partner mbB
(86) International application number: PCT/JP2020/039541
(87) International publication number: WO 2022/085112

(57) **Abstract**

A cold source unit (5) is connectable to an indoor heat exchanger (70) and is provided for a refrigerant circuit (4). The cold source unit (5) includes: a compressor (10); an outdoor heat exchanger (30) having a gas header (31); an oil return path through which refrigeration oil is returned from the gas header (31) to the compressor (10); an oil return adjusting unit (50) configured to adjust a flow rate of refrigeration oil flowing through the oil return path; and a controller (6) configured to control the refrigerant circuit (4). The controller (6) is configured to control the oil return adjusting unit (50) to prevent refrigeration oil from flowing through the oil return path when the compressor (10) is driven at a frequency equal to or higher than a threshold value, and control the oil return adjusting unit (50) to allow the refrigeration oil to flow through the oil return path when the compressor (10) is driven at a frequency lower than the threshold value.

## Description

### TECHNICAL FIELD

The present disclosure relates to a cold source unit and a refrigeration cycle apparatus.

### BACKGROUND ART

Conventionally, in a cold source unit forming a refrigerant circuit and a refrigeration cycle apparatus, an oil return path is provided in order to avoid shortage of refrigeration oil in a compressor.

Japanese Patent Laying-Open No. 2000-304378 (PTL 1) discloses an air conditioner including an oil return path through which refrigeration oil is returned from a condenser to a suction side of a compressor.

### CITATION LIST

### PATENT LITERATURE

PTL 1: Japanese Patent Laying-Open No. 2000-304378

### SUMMARY OF INVENTION

### TECHNICAL PROBLEM

In household air conditioners, the driving frequency of a compressor decreases as the indoor temperature approaches a set temperature. Further, in a highly airtight and highly heat-insulating house, particularly at night in an interim period (spring, autumn) in which air-conditioning load is relatively small, a compressor may be continuously driven at a frequency lower than the frequency in the normal operation. When the compressor is driven at such a low frequency, refrigeration oil tends to stay in an outdoor heat exchanger, which may cause depletion of the refrigeration oil inside the compressor. The air conditioner disclosed in Japanese Patent Laying-Open No. 2000-304378 is configured to return refrigeration oil from the condenser to the compressor through the oil return path, but no consideration is taken about staying of the refrigeration oil occurring when the compressor is driven at a low frequency. This may prevent efficient return of refrigeration oil in consideration of the driven state of the compressor.

The present disclosure has been made to solve the above-described problem. An object of the present disclosure is to provide a cold source unit and a refrigeration cycle apparatus that allow efficient return of oil in consideration of the driven state of a compressor.

### SOLUTION TO PROBLEM

A cold source unit according to the present disclosure is connectable to an indoor heat exchanger and is provided for a refrigerant circuit. The cold source unit includes: a compressor; an outdoor heat exchanger having a gas header; an oil return path through which refrigeration oil is returned from the gas header to the compressor; an oil return adjusting unit configured to adjust a flow rate of the refrigeration oil flowing through the oil return path; and a controller configured to control the refrigerant circuit. The controller is configured to control the oil return adjusting unit to prevent the refrigeration oil from flowing through the oil return path when the compressor is driven at a frequency equal to or higher than a threshold value, and control the oil return adjusting unit to allow the refrigeration oil to flow through the oil return path when the compressor is driven at a frequency lower than the threshold value.

According to the present disclosure, oil can be efficiently returned in consideration of the driven state of the compressor.

### BRIEF DESCRIPTION OF DRAWINGS

Fig. 1 is a diagram showing a configuration of a refrigeration cycle apparatus according to a first embodiment.
Fig. 2 is a timing chart showing timing of oil return control in a cooling mode for the refrigeration cycle apparatus according to the first embodiment.
Fig. 3 is a timing chart showing timing of oil return control in a heating mode for the refrigeration cycle apparatus according to the first embodiment.
Fig. 4 is a timing chart showing timing of oil return control in a heating mode for a refrigeration cycle apparatus according to a modification of the first embodiment.
Fig. 5 is a diagram showing a configuration of a refrigeration cycle apparatus according to a second embodiment.
Fig. 6 is a timing chart showing timing of oil return control in a cooling mode for the refrigeration cycle apparatus according to the second embodiment.
Fig. 7 is a timing chart showing timing of oil return control in a heating mode for the refrigeration cycle apparatus according to the second embodiment.
Fig. 8 is a timing chart showing timing of oil return control in a heating mode for a refrigeration cycle apparatus according to a modification of the second embodiment.

### DESCRIPTION OF EMBODIMENTS

Embodiments of the present disclosure will be hereinafter described in detail with reference to the accompanying drawings. While a plurality of embodiments will be described below, it has been originally intended at the time of filing of the present application to appropriately combine the configurations described in the embodiments. In the accompanying drawings, the same or corresponding portions are denoted by the same reference characters, and the description thereof will not be repeated.

### First Embodiment

### <Configuration of Refrigeration Cycle Apparatus>

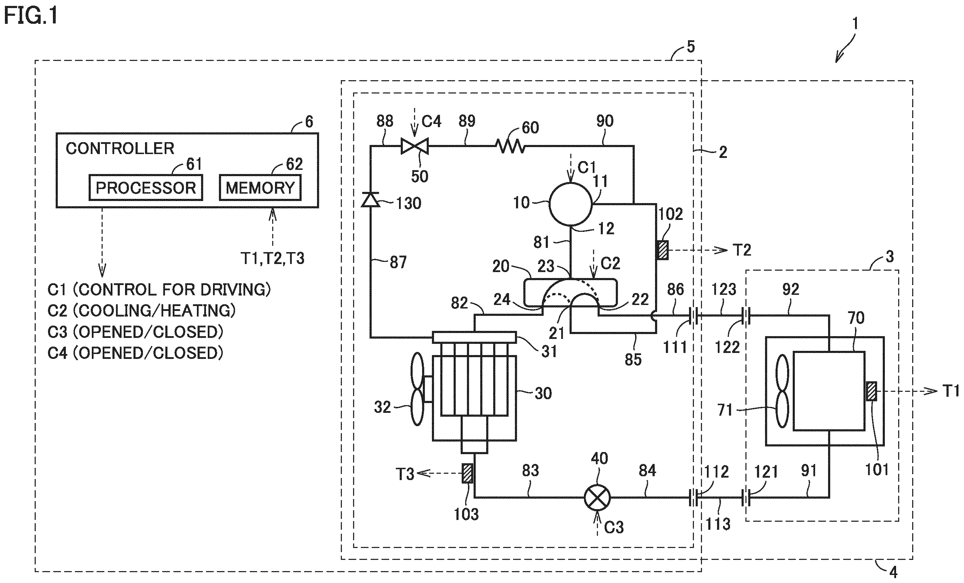

Fig. 1 is a diagram showing a configuration of a refrigeration cycle apparatus 1 according to the first embodiment. Fig. 1 functionally shows the connection relation and the arrangement configuration of parts in refrigeration cycle apparatus 1, but does not necessarily show the arrangement in a physical space.

As shown in Fig. 1, refrigeration cycle apparatus 1 includes a cold source unit 5 provided for forming a refrigerant circuit 4. Although not particularly limited, cold source unit 5 is generally often installed outdoors or outside, and therefore, also referred to as an outdoor unit or an outside unit. Cold source unit 5 includes a cold source device 2 and a controller 6 that controls each unit included in refrigerant circuit 4.

Controller 6 includes a processor 61 and a memory 62. Processor 61 is a main component for computation that executes various programs to thereby control refrigerant circuit 4. Processor 61 is configured, for example, of at least one of a central processing unit (CPU), a field programmable gate array (FPGA), and a graphics processing unit (GPU). Processor 61 may be configured of processing circuitry. Memory 62 is configured of volatile memories such as a dynamic random access memory (DRAM) and a static random access memory (SRAM), or non-volatile memories such as a read only memory (ROM). Memory 62 may include a solid state drive (SSD) or a hard disk drive (HDD).

Refrigerant circuit 4 is configured such that cold source device 2 is connected to a load device 3 via extension pipes 113 and 123.

Cold source device 2 includes ports 111 and 112 through which cold source device 2 is connected to load device 3. Load device 3 includes ports 121 and 122 through which load device 3 is connected to cold source device 2. Port 112 of cold source device 2 is connected to port 121 of load device 3 via extension pipe 113. Port 111 of cold source device 2 is connected to port 122 of load device 3 via extension pipe 123. In this way, cold source unit 5 is configured to be connectable to load device 3 via extension pipes 113 and 123.

Load device 3 includes an indoor heat exchanger 70. Indoor heat exchanger 70 is connected to port 121 of load device 3 via a pipe 91. Indoor heat exchanger 70 is connected to port 122 of load device 3 via a pipe 92.

Cold source device 2 includes a compressor 10, a four-way valve 20, an outdoor heat exchanger 30, and an expansion valve 40.

Four-way valve 20 includes a first port 21, a second port 22, a third port 23, and a fourth port 24. First port 21 of four-way valve 20 is connected to a suction port 11 of compressor 10 via a pipe 85. Second port 22 of four-way valve 20 is connected to port 111 of cold source device 2 via a pipe 86. Third port 23 of four-way valve 20 is connected to a discharge port 12 of compressor 10 via a pipe 81. Fourth port 24 of four-way valve 20 is connected to a gas header 31 of outdoor heat exchanger 30 via a pipe 82. Outdoor heat exchanger 30 is connected to expansion valve 40 via a pipe 83. Expansion valve 40 is connected to port 112 of cold source device 2 via a pipe 84.

Refrigeration cycle apparatus 1 is controlled to operate in one of a plurality of types of air conditioning modes including: a cooling mode in which the indoor space to be air-conditioned is cooled and a heating mode in which the indoor space is heated.

First, the operation of each of the units in the cooling mode will be described. In the cooling mode, in accordance with the control by (a control signal C2 from) controller 6, the communication state inside four-way valve 20 is controlled to be set to the first state in which first port 21 communicates with second port 22 and third port 23 communicates with fourth port 24. In other words, in the cooling mode, the communication state inside four-way valve 20 is controlled to be set to the first state in accordance with control signal C2 from controller 6, and thereby, suction port 11 of compressor 10 communicates with indoor heat exchanger 70 and discharge port 12 of compressor 10 communicates with outdoor heat exchanger 30. Thereby, the refrigerant circulates through refrigerant circuit 4 in order of compressor 10, outdoor heat exchanger 30, expansion valve 40, and indoor heat exchanger 70.

Compressor 10 suctions low-temperature and low-pressure gas refrigerant having flowed in from indoor heat exchanger 70 through suction port 11, and compresses the suctioned gas refrigerant to raise the pressure of the gas refrigerant. Compressor 10 discharges the high-temperature and high-pressure gas refrigerant obtained by compression to gas header 31 of outdoor heat exchanger 30 through discharge port 12. Compressor 10 is configured to, in accordance with control by (a control signal C1 from) controller 6, be operated and stopped and further be changed in rotational speed during its operation. Controller 6 outputs control signal C1 to compressor 10 to arbitrarily change the driving frequency of compressor 10. As the driving frequency changes, compressor 10 changes the rotation speed to thereby adjust the circulation amount of the refrigerant to be discharged. Compressor 10 may be of various types such as a scroll type, a rotary type, and a screw type, for example.

In the cooling mode, outdoor heat exchanger 30 functions as a condenser. Outdoor heat exchanger 30 receives, at gas header 31, the high-temperature and high-pressure gas refrigerant discharged from compressor 10 and exchanges heat between the received high-temperature and high-pressure gas refrigerant and the outdoor air that has been suctioned from the outdoors using a fan 32. The gas refrigerant from which heat has been dissipated to the outdoor air by this heat exchange is condensed inside outdoor heat exchanger 30 and turned into high-temperature and high-pressure liquid refrigerant. The high-temperature and high-pressure liquid refrigerant obtained by outdoor heat exchanger 30 flows out to expansion valve 40.

Expansion valve 40 lowers the pressure of the high-temperature and high-pressure liquid refrigerant having flowed in from outdoor heat exchanger 30. Expansion valve 40 causes low-temperature and low-pressure liquid refrigerant obtained by decompression to flow out to indoor heat exchanger 70. Expansion valve 40 serves as an electronic expansion valve whose degree of opening is adjusted in accordance with the control by (a control signal C3 from) controller 6.

In the cooling mode, indoor heat exchanger 70 functions as an evaporator. Indoor heat exchanger 70 exchanges heat between the low-temperature and low-pressure liquid refrigerant having flowed in from expansion valve 40 of cold source device 2 and the air suctioned from the indoor space using a fan 71. The liquid refrigerant having absorbed heat from air by this heat exchange evaporates inside indoor heat exchanger 70 and thus turns into low-temperature and low-pressure gas refrigerant. The low-temperature and low-pressure gas refrigerant obtained by indoor heat exchanger 70 flows out to compressor 10. The air from which heat has been absorbed by the gas refrigerant in indoor heat exchanger 70 is sent to the indoor space again. Thereby, the indoor space is cooled.

Then, the operation of each unit in the heating mode will be described. In the heating mode, in accordance with the control by (control signal C2 from) controller 6, the communication state inside four-way valve 20 is controlled to be set to the second state in which first port 21 communicates with fourth port 24 and second port 22 communicates with third port 23. In other words, in the heating mode, the communication state inside four-way valve 20 is controlled to be set to the second state in accordance with control signal C2 from controller 6, and thereby, suction port 11 of compressor 10 communicates with outdoor heat exchanger 30 and discharge port 12 of compressor 10 communicates with indoor heat exchanger 70. Thereby, the refrigerant circulates through refrigerant circuit 4 in order of compressor 10, indoor heat exchanger 70, expansion valve 40, and outdoor heat exchanger 30.

Compressor 10 suctions the low-temperature and low-pressure gas refrigerant having flowed in from outdoor heat exchanger 30 through suction port 11, and compresses the suctioned gas refrigerant to raise the pressure of the gas refrigerant. Through discharge port 12, compressor 10 discharges high-temperature and high-pressure gas refrigerant obtained by compression.

In the heating mode, indoor heat exchanger 70 functions as a condenser. Indoor heat exchanger 70 exchanges heat between the high-temperature and high-pressure gas refrigerant having been discharged from compressor 10 and air suctioned from the indoor space using fan 71. The gas refrigerant from which heat has been dissipated to air by this heat exchange is condensed inside indoor heat exchanger 70 and thereby turned into high-temperature and high-pressure liquid refrigerant. The high-temperature and high-pressure liquid refrigerant obtained by indoor heat exchanger 70 flows out to expansion valve 40. The air having absorbed heat from the gas refrigerant in indoor heat exchanger 70 is sent to the indoor space again. Thereby, the indoor space is heated.

Expansion valve 40 lowers the pressure of the high-temperature and high-pressure liquid refrigerant having flowed in from indoor heat exchanger 70. Expansion valve 40 causes the low-temperature and low-pressure liquid refrigerant obtained by decompression to flow out to outdoor heat exchanger 30.

In the heating mode, outdoor heat exchanger 30 functions as an evaporator. Outdoor heat exchanger 30 exchanges heat between the low-temperature and low-pressure liquid refrigerant having flowed in from expansion valve 40 and the outdoor air suctioned from the outdoors using fan 32. The liquid refrigerant having absorbed heat from the outdoor air by this heat exchange evaporates inside outdoor heat exchanger 30 and thereby turns into low-temperature and low-pressure gas refrigerant. The low-temperature and low-pressure gas refrigerant obtained by outdoor heat exchanger 30 flows out to compressor 10.

In refrigerant circuit 4 configured as described above, refrigeration oil circulates through refrigerant circuit 4 together with the refrigerant. The refrigeration oil plays a role of a lubricating action, a hermetically sealing action, an anticorrosive action, or the like and is required for driving compressor 10. A zero penetration velocity is known as the lowest flow velocity of the gas refrigerant required for the gas refrigerant to flow through gas header 31. When the flow velocity of the gas refrigerant exceeds the zero penetration velocity, the refrigeration oil flows through gas header 31 together with the gas refrigerant. In contrast, when the flow velocity of the gas refrigerant does not exceed the zero penetration velocity, the refrigeration oil also stays in gas header 31 together with the gas refrigerant.

In a household air conditioner operated using refrigeration cycle apparatus 1, the air conditioning load decreases as the indoor temperature approaches the set temperature, and accordingly, the driving frequency of compressor 10 decreases. Further, in a highly airtight and highly heat-insulating house, at night in an interim period (spring, autumn) in which the air-conditioning load is relatively small, compressor 10 may be continuously driven at a frequency lower than the frequency in the normal operation. When compressor 10 is driven at such a low frequency, the flow velocity of the gas refrigerant having flowed into gas header 31 less tends to exceed the zero penetration velocity, and the refrigeration oil tends to stay in gas header 31. In particular, when the pipe diameter of gas header 31 is relatively large and gas header 31 extends in the vertical direction, the flow velocity of the gas refrigerant having flowed into gas header 31 less tends to exceed the zero penetration velocity, and thus, the refrigeration oil tends to stay in gas header 31. When the refrigeration oil stays in gas header 31, the refrigeration oil in compressor 10 becomes depleted, which may cause problems in compressor 10, such as galling of shafts.

In general, in order to return the refrigeration oil accumulated inside gas header 31 to compressor 10, an oil returning operation of temporarily increasing the driving frequency of compressor 10 is performed. However, for example, when the oil returning operation is performed without stopping fan 71 of indoor heat exchanger 70 in the cooling mode, the indoor space may be excessively cooled by cold air that is fed into the indoor space from indoor heat exchanger 70. Further, for example, when the oil returning operation is performed while fan 71 of indoor heat exchanger 70 is stopped in the cooling mode, compressor 10 operates while fan 71 of indoor heat exchanger 70 is stopped, which is an unnatural operation. Further, in the oil returning operation, the driving frequency of compressor 10 is increased, and thus, power consumption increases correspondingly, which makes it difficult to save energy.

Accordingly, cold source unit 5 further includes an oil return path through which the refrigeration oil is returned from gas header 31 to compressor 10 in order to efficiently return oil in consideration of the driven state of compressor 10. Specifically, gas header 31 is connected to suction port 11 of compressor 10 via pipes 87 to 90. The oil return path is formed of pipes 87 to 90.

In the oil return path, cold source unit 5 includes a check valve 130, an oil return adjusting unit 50, and a capillary tube 60. Check valve 130 is connected to gas header 31 via pipe 87. Oil return adjusting unit 50 is connected to check valve 130 via pipe 88. Capillary tube 60 is connected to oil return adjusting unit 50 via pipe 89. Suction port 11 of compressor 10 is connected to capillary tube 60 via pipe 90.

Oil return adjusting unit 50 adjusts the flow rates of the refrigerant and the refrigeration oil flowing through the oil return path in accordance with the control by (a control signal C4 from) controller 6. Oil return adjusting unit 50 according to the first embodiment is an open/close valve that is switched between an opened state and a closed state in accordance with the control by (control signal C4 from) controller 6. Capillary tube 60 adjusts the flow rate of the refrigerant by a pressure difference. Check valve 130 allows the refrigerant and the refrigeration oil to flow from gas header 31 to suction port 11 of compressor 10 through the oil return path, but prevents the refrigerant and the refrigeration oil from flowing through the oil return path from suction port 11 of compressor 10 to gas header 31. Note that check valve 130 may be provided not only between gas header 31 and oil return adjusting unit 50, but also between oil return adjusting unit 50 and capillary tube 60, or between capillary tube 60 and compressor 10.

Depending on whether or not compressor 10 is operating at a low frequency, controller 6 controls oil return adjusting unit 50 to be in the closed state or the opened state. Specifically, depending on whether or not compressor 10 is driven at a frequency equal to or higher than a predetermined threshold value, controller 6 controls oil return adjusting unit 50 to be in the closed state or the opened state. The frequency defined as the threshold value may be set such that the flow velocity of the gas refrigerant flowing into gas header 31 does not exceed the zero penetration velocity. Such control by controller 6 will be hereinafter referred to as oil return control.

When compressor 10 is driven at a frequency equal to or higher than the threshold value, the refrigeration oil less tends to stay in gas header 31, and thus, controller 6 controls oil return adjusting unit 50 to be in the closed state so as to prevent the refrigeration oil from flowing through the oil return path.

On the other hand, when compressor 10 is driven at a frequency lower than the threshold value, the refrigeration oil tends to stay in gas header 31, and thus, controller 6 controls oil return adjusting unit 50 to be in the opened state so as to allow the refrigeration oil to flow through the oil return path. When oil return adjusting unit 50 is controlled to be in the opened state, the oil return path is opened, and thereby, the refrigerant and the refrigeration oil having flowed out of gas header 31 flow through the oil return path and then return to compressor 10. At this time, the gas refrigerant flowing through the oil return path is returned to compressor 10 in the state in which the gas refrigerant is lowered in pressure by the decompressing action of capillary tube 60.

In this way, controller 6 determines whether or not compressor 10 is driven at a frequency equal to or higher than the threshold value. Then, when compressor 10 is driven at the frequency equal to or higher than the threshold value, controller 6 controls the oil return path to be opened to thereby return the refrigeration oil to compressor 10.

As described above, when determining whether or not compressor 10 is operating at a low frequency, controller 6 determines the value of the driving frequency of compressor 10. In this case, in order to enhance the accuracy in determining whether or not compressor 10 is operating at a low frequency, controller 6 may refer to other values for determination in addition to the value for determination about the driving frequency of compressor 10.

Specifically, refrigerant circuit 4 further includes temperature sensors 101, 102, and 103. Temperature sensor 101 measures the temperature of air suctioned from the indoor space using fan 71 of indoor heat exchanger 70 (this temperature will be also hereinafter referred to as a "suction temperature") and then outputs a measured value T1 to controller 6. Temperature sensor 102 measures the saturation temperature (the evaporation temperature in the case of cooling) of the refrigerant in indoor heat exchanger 70 and then outputs a measured value T2 to controller 6. Temperature sensor 103 measures the saturation temperature (the condensation temperature in the case of cooling) of the refrigerant in outdoor heat exchanger 30 and then outputs a measured value T3 to controller 6. Note that controller 6 may use not only the suction temperature in indoor heat exchanger 70 but also the temperature measured by the temperature sensor provided in the indoor space in place of the suction temperature (measured value T1).

As the suction temperature specified by measured value T1 approaches the set temperature, the air conditioning load decreases, and accordingly, the driving frequency of compressor 10 decreases. When the driving frequency of compressor 10 decreases, the difference between the saturation pressure of the refrigerant in indoor heat exchanger 70 and the saturation pressure of the refrigerant in outdoor heat exchanger 30 decreases, and further, the difference between the saturation temperature of the refrigerant in indoor heat exchanger 70 and the saturation temperature of the refrigerant in outdoor heat exchanger 30 decreases.

Thus, based on the saturation temperature of the refrigerant in indoor heat exchanger 70 specified by measured value T2 and the saturation temperature of the refrigerant in outdoor heat exchanger 30 specified by measured value T3, controller 6 determines whether or not compressor 10 is driven at a frequency lower than the threshold value, i.e., whether or not compressor 10 is operating at a low frequency.

Specifically, when the difference between the saturation temperature of the refrigerant in indoor heat exchanger 70 specified by measured value T2 and the saturation temperature of the refrigerant in outdoor heat exchanger 30 specified by measured value T3 is less than a predetermined reference temperature, controller 6 determines that compressor 10 is driven at a frequency lower than the threshold value.

In this way, for determining whether or not compressor 10 is operating at a low frequency, controller 6 may have a function of (means for) determining a difference between the saturation temperature of the refrigerant in indoor heat exchanger 70 and the saturation temperature of the refrigerant in outdoor heat exchanger 30, in addition to the function of (means for) determining the value of the driving frequency of compressor 10.

As another means, based on the saturation pressure corresponding to the saturation temperature of the refrigerant in indoor heat exchanger 70 and the saturation pressure corresponding to the saturation temperature of the refrigerant in outdoor heat exchanger 30, controller 6 determines whether or not compressor 10 is driven at a frequency lower than the threshold value, i.e., whether or not compressor 10 is operating at a low frequency.

Specifically, controller 6 calculates the saturation pressure of the refrigerant in indoor heat exchanger 70 based on the saturation temperature specified by measured value T2, and calculates the saturation pressure of the refrigerant in outdoor heat exchanger 30 based on the saturation temperature specified by measured value T3. Then, when the difference between the saturation pressure of the refrigerant in indoor heat exchanger 70 and the saturation pressure of the refrigerant in outdoor heat exchanger 30 is lower than a predetermined reference pressure, controller 6 determines that compressor 10 is driven at a frequency lower than the threshold value.

In this way, for determining whether or not compressor 10 is operating at a low frequency, controller 6 may have a function of (means for) determining a difference between the saturation pressure of the refrigerant in indoor heat exchanger 70 and the saturation pressure of the refrigerant in outdoor heat exchanger 30, in addition to the function of (means for) determining the value of the driving frequency of compressor 10.

Note that controller 6 may selectively include at least one of: a function of (means for) determining the value of the driving frequency of compressor 10; a function of (means for) determining the difference between the saturation temperature of the refrigerant in indoor heat exchanger 70 and the saturation temperature of the refrigerant in outdoor heat exchanger 30; and a function of (means for) determining the difference between the saturation pressure of the refrigerant in indoor heat exchanger 70 and the saturation pressure of the refrigerant in outdoor heat exchanger 30.

### <Timing of Oil Return Control>

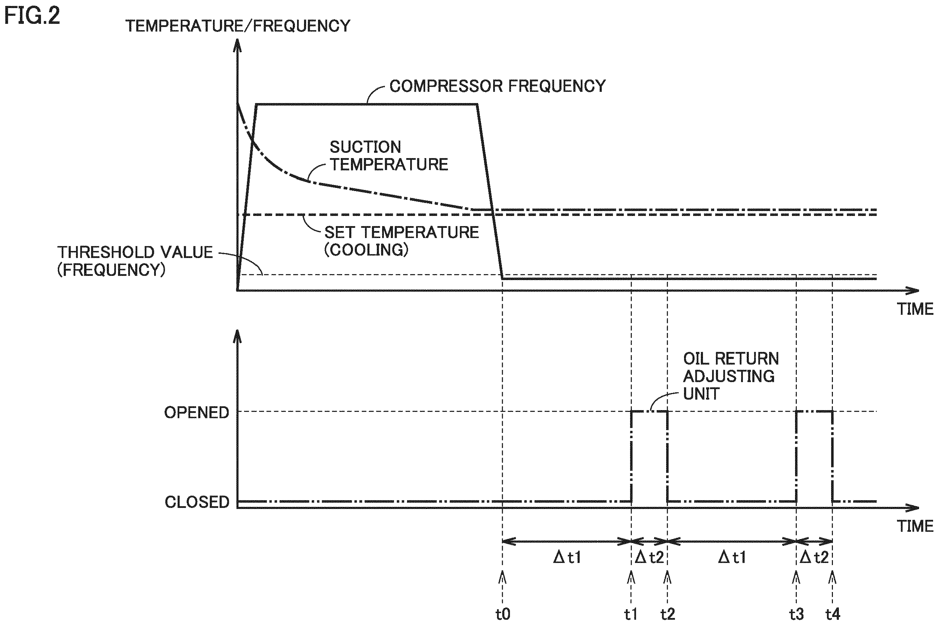

The following describes oil return control executed by controller 6 according to the first embodiment with reference to Figs. 2 to 4.

Fig. 2 is a timing chart showing the timing of oil return control in the cooling mode for refrigeration cycle apparatus 1 according to the first embodiment. Fig. 2 shows: a first timing chart representing a suction temperature of air suctioned from the indoor space, a set temperature in the cooling mode, and a driving frequency of compressor 10; and a second timing chart representing whether oil return adjusting unit 50 is opened or closed. In the first timing chart, the vertical axis represents a temperature and a driving frequency while the horizontal axis represents time. In the second timing chart, the vertical axis represents whether oil return adjusting unit 50 is opened or closed while the horizontal axis represents time. The horizontal axis (time axis) in the second timing chart corresponds to the horizontal axis (time axis) in the first timing chart.

As shown in Fig. 2, when compressor 10 is driven in the cooling mode and thereby the suction temperature of the indoor air gradually decreases and further decreases close to the set temperature, the driving frequency of compressor 10 gradually decreases and then falls below the threshold value (timing t0). When compressor 10 is continuously driven at a frequency lower than the threshold value, the flow velocity of the gas refrigerant less tends to exceed the zero penetration velocity, and thus, the refrigeration oil stays in gas header 31.

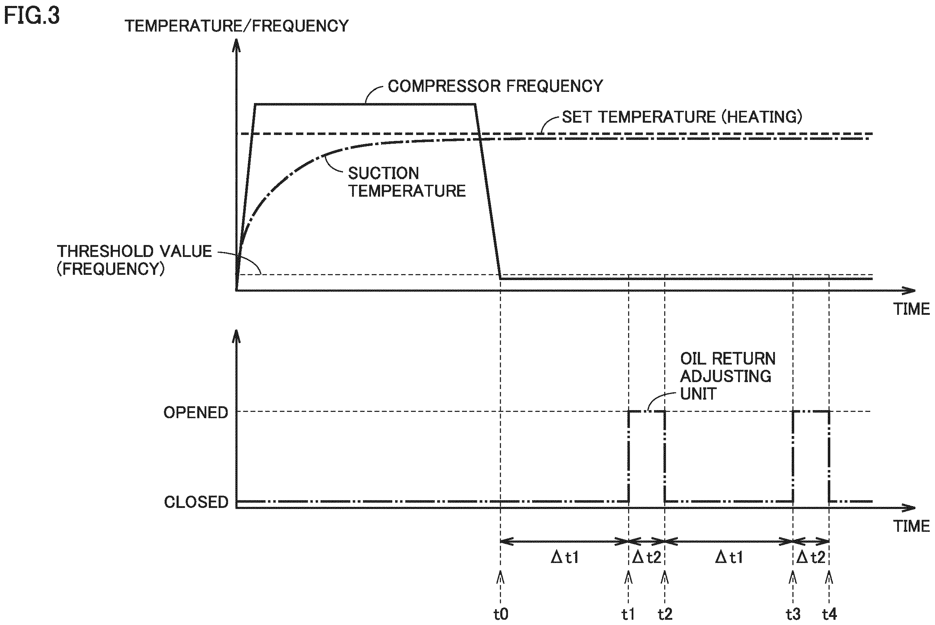

After controller 6 drives compressor 10 at a frequency lower than the threshold value, it maintains oil return adjusting unit 50 in the closed state for a predetermined first period (Δt1), and then switches oil return adjusting unit 50 from the closed state to the opened state (timing t1). Thereby, the oil return path is opened, so that the refrigeration oil is returned to compressor 10, specifically, from gas header 31 on the high-pressure side through the oil return path to suction port 11 of compressor 10 on the low-pressure side. The first period (Δt1) is a prediction period starting when compressor 10 starts to be driven at a frequency lower than the threshold value (in other words, from when the refrigeration oil starts to stay in gas header 31) and ending when a prescribed amount or more of the refrigeration oil accumulates, and, for example, may be set to an arbitrary period such as two hours. The first period (Δt1) can be set to the same period also in each of the timing charts shown in Figs. 3, 4, and 6 to 8, which will be described later.

After controller 6 switches oil return adjusting unit 50 from the closed state to the opened state, it maintains oil return adjusting unit 50 in the opened state for a predetermined second period (Δt2), and then switches oil return adjusting unit 50 from the opened state to the closed state again (timing t2). Thereby, the oil return path is closed again, so that the refrigerant circulates through refrigerant circuit 4 again without flowing through the oil return path. The second period (Δt2) is a prediction period starting when the oil return path is opened and ending when a prescribed amount or more of the refrigeration oil accumulated in gas header 31 returns to compressor 10 and, for example, may be set to an arbitrary period such as ten minutes. The second period (Δt2) can be set to the same period also in each of the timing charts shown in Figs. 3, 4, and 6 to 8, which will be described later.

After controller 6 switches oil return adjusting unit 50 from the opened state to the closed state, it maintains oil return adjusting unit 50 in the closed state for the predetermined first period (Δt1), and then switches oil return adjusting unit 50 from the closed state to the opened state again (timing t3). Thereby, the oil return path is opened again, so that the refrigeration oil is returned to compressor 10, specifically, from gas header 31 on the high-pressure side through the oil return path to suction port 11 of compressor 10 on the low-pressure side.

After controller 6 switches oil return adjusting unit 50 from the closed state to the opened state, it maintains oil return adjusting unit 50 in the opened state for the predetermined second period (Δt2), and then switches oil return adjusting unit 50 from the opened state to the closed state again (timing t4). Thereby, the oil return path is closed again, so that the refrigerant circulates through refrigerant circuit 4 again without flowing through the oil return path.

Fig. 3 is a timing chart showing the timing of oil return control in the heating mode for refrigeration cycle apparatus 1 according to the first embodiment. Fig. 3 shows: a first timing chart representing a suction temperature of air suctioned from the indoor space, a set temperature in the heating mode, and a driving frequency of compressor 10; and a second timing chart representing whether oil return adjusting unit 50 is opened or closed. In the first timing chart, the vertical axis represents a temperature and a driving frequency while the horizontal axis represents time. In the second timing chart, the vertical axis represents whether oil return adjusting unit 50 is opened or closed while the horizontal axis represents time. The horizontal axis (time axis) in the second timing chart corresponds to the horizontal axis (time axis) in the first timing chart.

As shown in Fig. 3, when compressor 10 is driven in the heating mode and thereby the suction temperature of the indoor air gradually increases and further increases close to the set temperature, the driving frequency of compressor 10 gradually decreases and then falls below the threshold value (timing t0). When compressor 10 is continuously driven at a frequency lower than the threshold value, the flow velocity of the gas refrigerant less tends to exceed the zero penetration velocity, and thus, the refrigeration oil stays in gas header 31.

After controller 6 drives compressor 10 at a frequency lower than the threshold value, it maintains oil return adjusting unit 50 in the closed state for the predetermined first period (Δt1), and then switches oil return adjusting unit 50 from the closed state to the opened state (timing t1). Thereby, the oil return path is opened, so that the refrigeration oil is returned to compressor 10, specifically, from gas header 31 through the oil return path to suction port 11 of compressor 10.

After controller 6 switches oil return adjusting unit 50 from the closed state to the opened state, it maintains oil return adjusting unit 50 in the opened state for the predetermined second period (Δt2), and then switches oil return adjusting unit 50 from the opened state to the closed state again (timing t2). Thereby, the oil return path is closed again, so that the refrigerant circulates through refrigerant circuit 4 again without flowing through the oil return path.

After controller 6 switches oil return adjusting unit 50 from the opened state to the closed state, it maintains oil return adjusting unit 50 in the closed state for the predetermined first period (Δt1), and then switches oil return adjusting unit 50 from the closed state to the opened state again (timing t3). Thereby, the oil return path is opened again, so that the refrigeration oil is returned to compressor 10, specifically, from gas header 31 through the oil return path to suction port 11 of compressor 10.

After controller 6 switches oil return adjusting unit 50 from the closed state to the opened state, it maintains oil return adjusting unit 50 in the opened state for the predetermined second period (Δt2), and then switches oil return adjusting unit 50 from the opened state to the closed state again (timing t4). Thereby, the oil return path is closed again, so that the refrigerant circulates through refrigerant circuit 4 again without flowing through the oil return path.

As described above, in refrigeration cycle apparatus 1 according to the first embodiment, controller 6 maintains oil return adjusting unit 50 in the closed state so as to prevent the refrigeration oil from flowing through the oil return path when compressor 10 is driven at a frequency equal to or higher than the threshold value, and also maintains oil return adjusting unit 50 in the opened state so as to allow the refrigeration oil to flow through the oil return path when compressor 10 is driven at a frequency lower than the threshold value. Thereby, in refrigeration cycle apparatus 1, oil is returned only when compressor 10 is driven at a frequency lower than the threshold value, i.e., only in the state in which the refrigeration oil tends to stay in gas header 31, and thus, oil can be efficiently returned in consideration of the driven state of compressor 10.

Controller 6 repeatedly switches the state of oil return adjusting unit 50 between the opened state and the closed state so as to alternately repeat: the state in which the refrigeration oil flows through the oil return path; and the state in which the refrigeration oil does not flow through the oil return path, when compressor 10 is driven at a frequency lower than the threshold value. Thereby, in the state in which compressor 10 is driven at a frequency lower than the threshold value, refrigeration cycle apparatus 1 can keeps the balance between a period during which oil is returned and a period during which the refrigerant is circulated through refrigerant circuit 4.

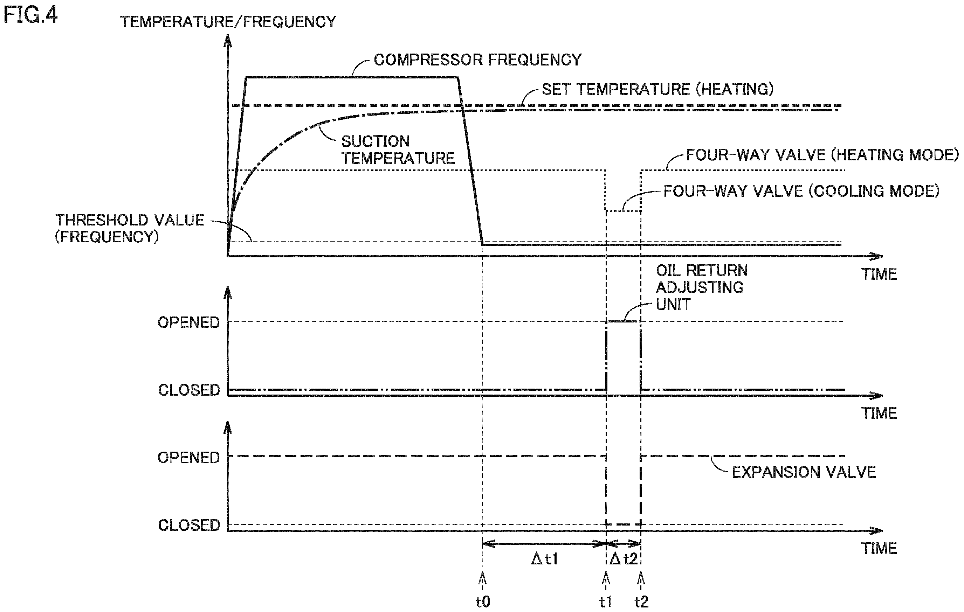

When oil return adjusting unit 50 is controlled to be in the opened state in the heating mode as shown in Fig. 3 described above, the pressure at gas header 31 and the pressure at suction port 11 of compressor 10 are the same or substantially the same (low pressure), and accordingly, the amount of refrigeration oil returned to compressor 10 through the oil return path may be insufficient. Thus, in refrigeration cycle apparatus 1 according to a modification, controller 6 may perform oil return control as shown in Fig. 4.

Fig. 4 is a timing chart showing the timing of oil return control in the heating mode for refrigeration cycle apparatus 1 according to the modification of the first embodiment. Fig. 4 shows: a first timing chart representing a suction temperature of air suctioned from the indoor space, a set temperature in the heating mode, a driving frequency of compressor 10, and switching of four-way valve 20; a second timing chart representing whether oil return adjusting unit 50 is opened or closed; and a third timing chart representing whether expansion valve 40 is opened or closed. In the first timing chart, the vertical axis represents a temperature and a driving frequency while the horizontal axis represents time. In the second timing chart, the vertical axis represents whether oil return adjusting unit 50 is opened or closed while the horizontal axis represents time. In the third timing chart, the vertical axis represents whether expansion valve 40 is opened or closed while the horizontal axis represents time. The horizontal axis (time axis) in each of the second and third timing charts corresponds to the horizontal axis (time axis) in the first timing chart.

As shown in Fig. 4, when compressor 10 is driven in the heating mode and thereby the suction temperature of the indoor air gradually increases and further increases close to the set temperature, the driving frequency of compressor 10 gradually decreases and then falls below the threshold value (timing t0). When compressor 10 is continuously driven at a frequency lower than the threshold value, the flow velocity of the gas refrigerant less tends to exceed the zero penetration velocity, and thus, the refrigeration oil stays in gas header 31.

After controller 6 drives compressor 10 at a frequency lower than the threshold value, it maintains oil return adjusting unit 50 in the closed state for a predetermined first period (Δt1). Then, controller 6 switches the communication state inside four-way valve 20 from the second state in the heating mode to the first state in the cooling mode, switches oil return adjusting unit 50 from the closed state to the opened state, and further switches expansion valve 40 from the opened state to the closed state (timing 11). Thereby, the oil return path is maintained in the opened state while gas header 31 is on the high-pressure side and suction port 11 of compressor 10 is on the low-pressure side. Accordingly, the refrigeration oil is returned to compressor 10, specifically, from gas header 31 on the high-pressure side through the oil return path to suction port 11 of compressor 10 on the low-pressure side. Further, since expansion valve 40 is maintained in the closed state, flowing of the refrigerant and the refrigeration oil from outdoor heat exchanger 30 to indoor heat exchanger 70 can be prevented as much as possible.

After controller 6 switches oil return adjusting unit 50 from the closed state to the opened state, it maintains oil return adjusting unit 50 in the opened state for a predetermined second period (Δt2). Then, controller 6 switches the communication state inside four-way valve 20 from the first state in the cooling mode to the second state in the heating mode, switches oil return adjusting unit 50 from the opened state to the closed state, and further switches expansion valve 40 from the closed state to the opened state (timing t2). Thereby, the oil return path is closed again in the state in which the communication state inside four-way valve 20 is maintained in the second state in the heating mode and expansion valve 40 is maintained in the opened state, with the result that the refrigerant circulates through refrigerant circuit 4 again without flowing through the oil return path.

As described above, in refrigeration cycle apparatus 1 according to the modification of the first embodiment, when compressor 10 is driven at a frequency equal to or higher than the threshold value, controller 6 switches four-way valve 20 from the second state in the heating mode to the first state in the cooling mode, switches expansion valve 40 from the opened state to the closed state, and then, maintains oil return adjusting unit 50 in the opened state such that the refrigeration oil flows through the oil return path. Thereby, in refrigeration cycle apparatus 1, even when the refrigeration oil stays in gas header 31 in the heating mode, by temporarily setting gas header 31 to be on the high-pressure side and setting suction port 11 of compressor 10 to be on the low-pressure side, the refrigeration oil can be efficiently returned to compressor 10 through the oil return path.

### Second Embodiment

### <Configuration of Refrigeration Cycle Apparatus>

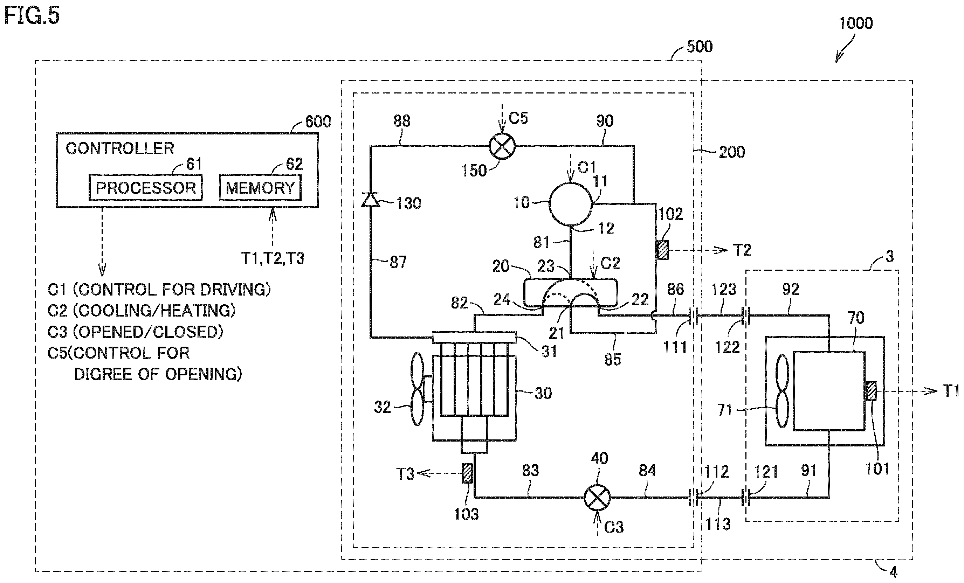

Fig. 5 is a diagram showing a configuration of a refrigeration cycle apparatus 1000 according to the second embodiment. Note that the following describes only portions of refrigeration cycle apparatus 1000 that are different from those of refrigeration cycle apparatus 1 according to the first embodiment.

As shown in Fig. 5, in refrigeration cycle apparatus 1000 according to the second embodiment, a cold source device 200 in a cold source unit 500 includes an oil return adjusting unit 150 in place of oil return adjusting unit 50 (an open/close valve switched between the opened state and the closed state) and capillary tube 60 included in cold source device 2 according to the first embodiment.

Oil return adjusting unit 150 serves as an electronic expansion valve whose degree of opening is adjusted in accordance with control by (a control signal C5 from) a controller 600. Controller 600 controls the degree of opening of oil return adjusting unit 150 depending on whether or not compressor 10 is driven at a frequency equal to or higher than a predetermined threshold value. Specifically, when compressor 10 is driven at a frequency equal to or higher than the threshold value, the refrigeration oil less tends to stay in gas header 31, and thus, controller 600 reduces the degree of opening of oil return adjusting unit 150 so as to prevent the refrigeration oil from flowing through the oil return path. On the other hand, when compressor 10 is driven at a frequency lower than the threshold value, the refrigeration oil tends to stay in gas header 31, and thus, controller 600 increases the degree of opening of oil return adjusting unit 150 so as to allow the refrigeration oil to flow through the oil return path.

### <Timing of Oil Return Control>

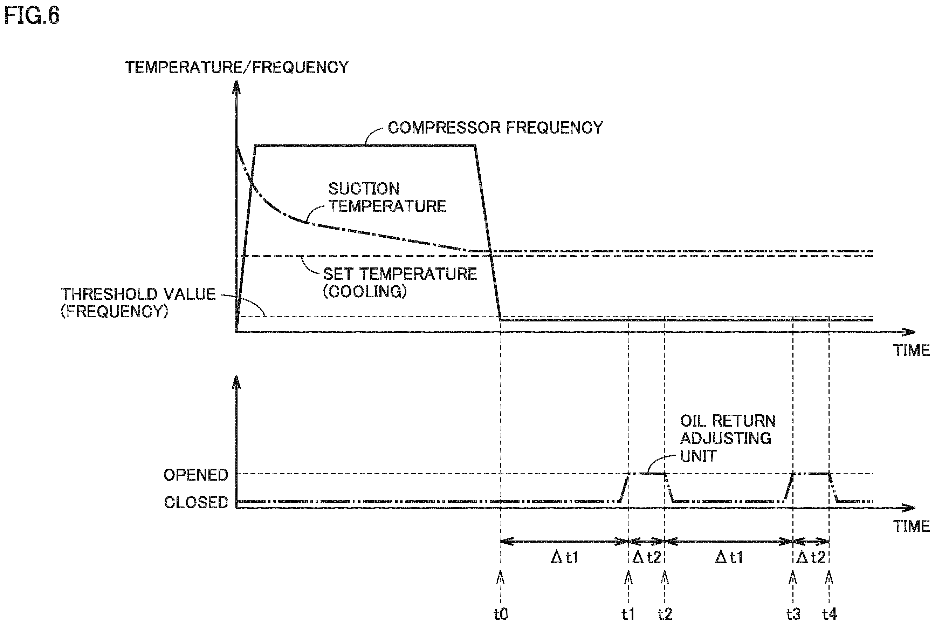

The following describes oil return control executed by controller 600 according to the second embodiment with reference to Figs. 6 to 8.

Fig. 6 is a timing chart showing the timing of oil return control in the cooling mode for refrigeration cycle apparatus 1000 according to the second embodiment. Fig. 6 shows: a first timing chart representing a suction temperature of air suctioned from the indoor space, a set temperature in the cooling mode, and a driving frequency of compressor 10: and a second timing chart representing whether oil return adjusting unit 150 is opened or closed. In the first timing chart, the vertical axis represents a temperature and a driving frequency while the horizontal axis represents time. In the second timing chart, the vertical axis represents whether oil return adjusting unit 150 is opened or closed while the horizontal axis represents time. The horizontal axis (time axis) in the second timing chart corresponds to the horizontal axis (time axis) in the first timing chart.

As shown in Fig. 6, when compressor 10 is driven in the cooling mode and thereby the suction temperature of the indoor air gradually decreases and further decreases close to the set temperature, the driving frequency of compressor 10 gradually decreases and then falls below the threshold value (timing t0). When compressor 10 is continuously driven at a frequency lower than the threshold value, the flow velocity of the gas refrigerant less tend to exceed the zero penetration velocity, and thus, the refrigeration oil stays in gas header 31.

After controller 600 drives compressor 10 at a frequency lower than the threshold value, it gradually opens oil return adjusting unit 150 to a predetermined first degree of opening. The degree of opening of oil return adjusting unit 150 reaches the first degree of opening (timing t1) before a predetermined first period (Δt1) elapses from timing t0. Thereby, the oil return path is opened at the first degree of opening, so that the refrigeration oil whose flow rate has been adjusted at the first degree of opening is returned to compressor 10, specifically, from gas header 31 on the high-pressure side through the oil return path to suction port 11 of compressor 10 on the low-pressure side.

After controller 600 opens oil return adjusting unit 150 at the first degree of opening, it maintains the degree of opening of oil return adjusting unit 150 at the first degree of opening for a predetermined second period (Δt2), and then gradually closes oil return adjusting unit 150 again (timing t2). Thereby, the oil return path is closed again, so that the refrigerant circulates through refrigerant circuit 4 again without flowing through the oil return path.

After controller 600 maintains oil return adjusting unit 150 in the closed state, it gradually opens oil return adjusting unit 150 to the predetermined first degree of opening again. The degree of opening of oil return adjusting unit 150 reaches the first degree of opening (timing t3) before a predetermined first period (Δt1) elapses from timing t2. Thereby, the oil return path is opened again at the first degree of opening, so that the refrigeration oil whose flow rate has been adjusted at the first degree of opening is returned to compressor 10, specifically, from gas header 31 on the high-pressure side through the oil return path to suction port 11 of compressor 10 on the low-pressure side.

After controller 600 opens oil return adjusting unit 150 at the first degree of opening, it maintains the degree of opening of oil return adjusting unit 150 at the first degree of opening for a predetermined second period (Δt2), and then gradually closes oil return adjusting unit 150 again (timing t4). Thereby, the oil return path is closed again, so that the refrigerant circulates through refrigerant circuit 4 again without flowing through the oil return path.

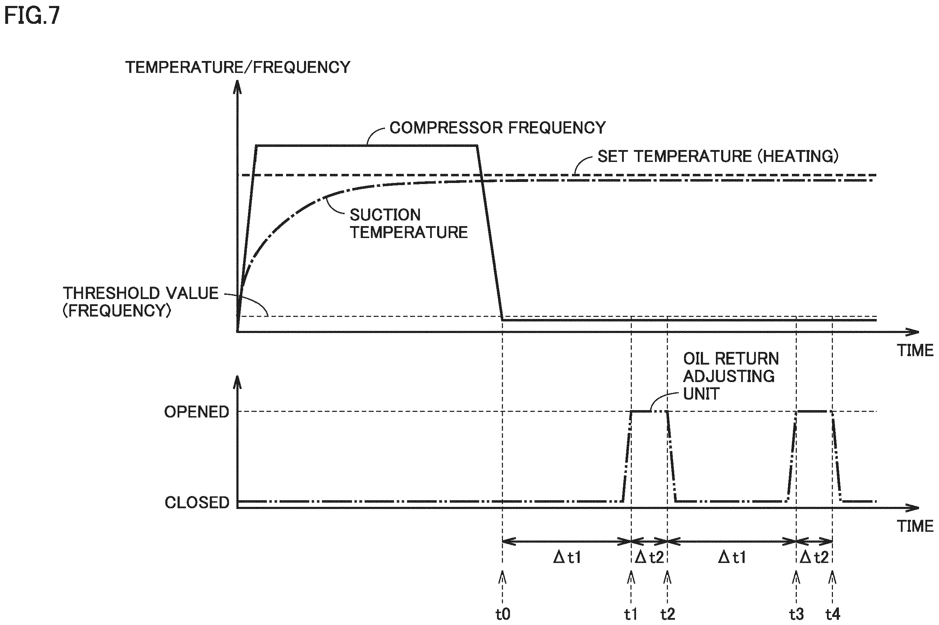

Fig. 7 is a timing chart showing the timing of oil return control in the heating mode for refrigeration cycle apparatus 1000 according to the second embodiment. Fig. 7 shows: a first timing chart representing a suction temperature of air suctioned from the indoor space, a set temperature in the heating mode, and a driving frequency of compressor 10; and a second timing chart representing whether oil return adjusting unit 150 is opened or closed. In the first timing chart, the vertical axis represents a temperature and a driving frequency while the horizontal axis represents time. In the second timing chart, the vertical axis represents whether oil return adjusting unit 150 is opened or closed while the horizontal axis represents time. The horizontal axis (time axis) in the second timing chart corresponds to the horizontal axis (time axis) in the first timing chart.

As shown in Fig. 7, when compressor 10 is driven in the heating mode and thereby the suction temperature of the indoor air gradually increases and further increases close to the set temperature, the driving frequency of compressor 10 gradually decreases and then falls below the threshold value (timing t0). When compressor 10 is continuously driven at a frequency lower than the threshold value, the flow velocity of the gas refrigerant less tends to exceed the zero penetration velocity, and thus, the refrigeration oil stays in gas header 31.

After controller 600 drives compressor 10 at a frequency lower than the threshold value, it gradually opens oil return adjusting unit 150 to the predetermined first degree of opening. The degree of opening of oil return adjusting unit 150 reaches the second degree of opening (timing t1) before a predetermined first period (Δt1) elapses from timing t0. Thereby, the oil return path is opened at the second degree of opening, so that the refrigeration oil whose flow rate has been adjusted at the second degree of opening is returned to compressor 10, specifically, from gas header 31 through the oil return path to suction port 11 of compressor 10. Further, the second degree of opening in the heating mode is set to be larger than the first degree of opening in the cooling mode. Thus, even when the pressure at gas header 31 and the pressure at suction port 11 of compressor 10 are the same or substantially the same (low pressure), the refrigeration oil is returned to compressor 10 at a flow rate higher than that in the cooling mode.

After controller 600 opens oil return adjusting unit 150 at the second degree of opening, it maintains the degree of opening of oil return adjusting unit 150 at the second degree of opening for a predetermined second period (Δt2), and then gradually closes oil return adjusting unit 150 again (timing t2). Thereby, the oil return path is closed again, so that the refrigerant circulates through refrigerant circuit 4 again without flowing through the oil return path.

After controller 600 maintains oil return adjusting unit 150 in the closed state, it gradually opens oil return adjusting unit 150 to the predetermined second degree of opening again. The degree of opening of oil return adjusting unit 150 reaches the second degree of opening (timing t3) before the predetermined first period (Δt1) elapses from timing t2. Thereby, the oil return path is opened again at the second degree of opening, so that the refrigeration oil whose flow rate has been adjusted at the second degree of opening is returned to compressor 10, specifically, from gas header 31 on the high-pressure side through the oil return path to suction port 11 of compressor 10 on the low-pressure side.

After controller 600 opens oil return adjusting unit 150 at the second degree of opening, it maintains the degree of opening of oil return adjusting unit 150 at the second degree of opening for the predetermined second period (Δt2), and then gradually closes oil return adjusting unit 150 again (timing t4). Thereby, the oil return path is closed again, so that the refrigerant circulates through refrigerant circuit 4 again without flowing through the oil return path.

As described above, in refrigeration cycle apparatus 1000 according to the second embodiment, controller 600 maintains oil return adjusting unit 150 in the closed state so as to prevent the refrigeration oil from flowing through the oil return path when compressor 10 is driven at a frequency equal to or higher than the threshold value, and also, maintains oil return adjusting unit 150 in the opened state so as to allow the refrigeration oil to flow through the oil return path when compressor 10 is driven at a frequency lower than the threshold value. Thereby, in refrigeration cycle apparatus 1000, oil is returned only when compressor 10 is driven at a frequency lower than the threshold value, i.e., only in the state in which the refrigeration oil tends to stay in gas header 31, and thus, oil can be efficiently returned in consideration of the driven state of compressor 10.

Controller 600 repeatedly switches the state of oil return adjusting unit 150 between the opened state and the closed state so as to alternately repeat: the state in which the refrigeration oil flows through the oil return path; and the state in which the refrigeration oil does not flow through the oil return path, when compressor 10 is driven at a frequency lower than the threshold value. Thereby, in the state in which compressor 10 is driven at a frequency lower than the threshold value, refrigeration cycle apparatus 1000 can keeps the balance between a period during which oil is returned and a period during which the refrigerant is circulated through refrigerant circuit 4.

Oil return adjusting unit 150 serves as an electronic expansion valve whose degree of opening is adjusted in accordance with control by controller 600. Thus, by adjusting the degree of opening of oil return adjusting unit 150, refrigeration cycle apparatus 1000 can adjust the degree of opening of the oil return path depending on whether the air conditioning mode is the cooling mode or the heating mode. Further, since it is not necessary to provide capillary tube 60 as in refrigeration cycle apparatus 1 according to the first embodiment, the manufacturing cost can be suppressed.

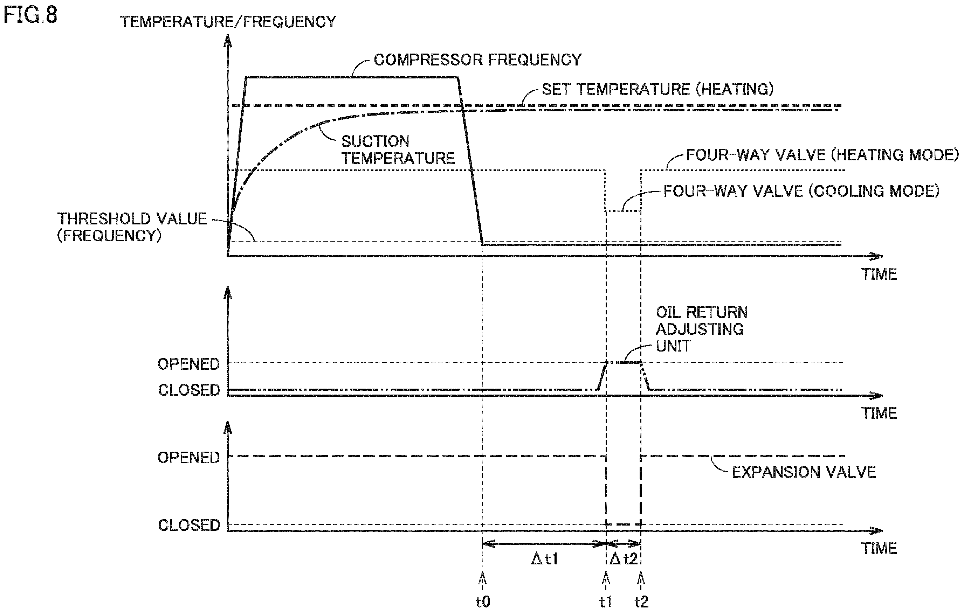

When oil return adjusting unit 150 is controlled to be in the opened state in the heating mode as shown in Fig. 7 described above, the pressure at gas header 31 and the pressure at suction port 11 of compressor 10 are the same or substantially the same (low pressure). Thus, even when the degree of opening of oil return adjusting unit 150 is adjusted, the amount of refrigeration oil returned to compressor 10 through the oil return path may be insufficient. Accordingly, in a refrigeration cycle apparatus 1000 according to a modification, controller 600 may perform oil return control as shown in Fig. 8.

Fig. 8 is a timing chart showing the timing of oil return control in a heating mode for refrigeration cycle apparatus 1000 according to the modification of the second embodiment. Fig. 8 shows: a first timing chart representing a suction temperature of air suctioned from the indoor space, a set temperature in the heating mode, a driving frequency of compressor 10, and switching of four-way valve 20; a second timing chart representing whether oil return adjusting unit 150 is opened or closed; and a third timing chart representing whether expansion valve 40 is opened or closed. In the first timing chart, the vertical axis represents a temperature and a driving frequency while the horizontal axis represents time. In the second timing chart, the vertical axis represents whether oil return adjusting unit 150 is opened or closed while the horizontal axis represents time. In the third timing chart, the vertical axis represents whether expansion valve 40 is opened or closed while the horizontal axis represents time. The horizontal axis (time axis) in each of the second and third timing charts corresponds to the horizontal axis (time axis) in the first timing chart.

As shown in Fig. 8, when compressor 10 is driven in the heating mode and thereby the suction temperature of the indoor air gradually increases and further increases close to the set temperature, the driving frequency of compressor 10 gradually decreases and then falls below the threshold value (timing t0). When compressor 10 is continuously driven at a frequency lower than the threshold value, the flow velocity of the gas refrigerant less tends to exceed the zero penetration velocity, and thus, the refrigeration oil stays in gas header 31.

After controller 600 drives compressor 10 at a frequency lower than the threshold value, it switches the communication state inside four-way valve 20 from the second state in the heating mode to the first state in the cooling mode, gradually opens oil return adjusting unit 50 to a predetermined first degree of opening, and further switches expansion valve 40 from the opened state to the closed state (timing t1). The degree of opening of oil return adjusting unit 150 reaches the second degree of opening (timing t1) before a predetermined first period (Δt1) elapses from timing t0. Thereby, the oil return path is maintained in the opened state while gas header 31 is on the high-pressure side and suction port 11 of compressor 10 is on the low-pressure side. Accordingly, the refrigeration oil is returned to compressor 10, specifically, from gas header 31 on the high-pressure side through the oil return path to suction port 11 of compressor 10 on the low-pressure side. Further, since expansion valve 40 is maintained in the closed state, flowing of the refrigerant and the refrigeration oil from outdoor heat exchanger 30 to indoor heat exchanger 70 can be prevented as much as possible.

After controller 600 opens oil return adjusting unit 150 at the second degree of opening, it maintains the degree of opening of oil return adjusting unit 150 at the second degree of opening for a predetermined second period (Δt2). Then, controller 600 switches the communication state inside four-way valve 20 from the first state in the cooling mode to the second state in the heating mode, gradually closes oil return adjusting unit 150, and further switches expansion valve 40 from the closed state to the opened state (timing t2). Thereby, the oil return path is closed again in the state in which the communication state inside four-way valve 20 is maintained in the second state in the heating mode and expansion valve 40 is maintained in the opened state, with the result that the refrigerant circulates through refrigerant circuit 4 again without flowing through the oil return path.

As described above, in refrigeration cycle apparatus 1000 according to the modification of the second embodiment, when compressor 10 is driven at a frequency equal to or higher than the threshold value, controller 600 switches four-way valve 20 from the second state in the heating mode to the first state in the cooling mode, switches expansion valve 40 from the opened state to the closed state, and then maintains oil return adjusting unit 150 in the opened state so as to allow the refrigeration oil to flow through the oil return path. Thereby, in refrigeration cycle apparatus 1000, even when the refrigeration oil stays in gas header 31 in the heating mode, by temporarily setting gas header 31 to be on the high-pressure side and setting suction port 11 of compressor 10 to be on the low-pressure side, the refrigeration oil can be efficiently returned to compressor 10 through the oil return path.

### (Summary)

The present disclosure relates to a cold source unit 5, 500 that is connectable to an indoor heat exchanger 70 and is provided for a refrigerant circuit 4. Cold source unit 5, 500 includes: a compressor 10; an outdoor heat exchanger 30 having a gas header 31; an oil return path (pipes 87 to 90) through which refrigeration oil is returned from gas header 31 to compressor 10; an oil return adjusting unit 50, 150 configured to adjust a flow rate of the refrigeration oil flowing through the oil return path; and a controller 6, 600 configured to control refrigerant circuit 4. Controller 6, 600 is configured to control oil return adjusting unit 50, 150 to prevent the refrigeration oil from flowing through the oil return path when compressor 10 is driven at a frequency equal to or higher than a threshold value, and to control oil return adjusting unit 50, 150 to allow the refrigeration oil to flow through the oil return path when compressor 10 is driven at a frequency lower than the threshold value.

By providing such a configuration, cold source unit 5, 500 returns oil only when compressor 10 is driven at a frequency lower than the threshold value, i.e., only in the state in which the refrigeration oil tends to stay in gas header 31. Accordingly, oil can be efficiently returned in consideration of the driven state of compressor 10.

Preferably, controller 6, 600 is configured to control oil return adjusting unit 50, 150 to alternately repeat a state in which the refrigeration oil flows through the oil return path and a state in which the refrigeration oil does not flow through the oil return path, when compressor 10 is driven at a frequency lower than the threshold value.

By providing such a configuration, in the state in which compressor 10 is driven at a frequency lower than the threshold value, cold source unit 5, 500 can keep the balance between a period during which oil is returned and a period during which refrigerant is circulated through refrigerant circuit 4.

Preferably, cold source unit 5, 500 further includes: a four-way valve 20; and an expansion valve 40 provided in a path between outdoor heat exchanger 30 and indoor heat exchanger 70. A communication state inside four-way valve 20 is switched between a first state and a second state. In the first state, a suction port 11 of compressor 10 communicates with indoor heat exchanger 70 and a discharge port 12 of compressor 10 communicates with outdoor heat exchanger 30. In the second state, suction port 11 of compressor 10 communicates with outdoor heat exchanger 30 and discharge port 12 of compressor 10 communicates with indoor heat exchanger 70. Controller 6, 600 is configured to switch four-way valve 20 from the second state to the first state and switch expansion valve 40 from an opened state to a closed state, and to control oil return adjusting unit 50, 150 so as to allow the refrigeration oil to flow through the oil return path, when four-way valve 20 is in the second state and compressor 10 is driven at a frequency lower than the threshold value.

By providing such a configuration, even when the refrigeration oil stays in gas header 31 in the heating mode, cold source unit 5, 500 switches the communication state inside four-way valve 20 from the second state to the first state to temporarily set gas header 31 to be on the high-pressure side and set suction port 11 of compressor 10 to be on the low-pressure side, and thereby, the refrigeration oil can be efficiently returned to compressor 10 through the oil return path.

Preferably, controller 6, 600 is configured to determine whether or not compressor 10 is driven at a frequency lower than the threshold value, based on a saturation temperature of refrigerant in indoor heat exchanger 70 and a saturation temperature of refrigerant in outdoor heat exchanger 30.

By providing such a configuration, cold source unit 5, 500 can enhance the accuracy in determining whether or not compressor 10 is driven at a frequency lower than the threshold value.

Preferably, controller 6, 600 determines whether or not compressor 10 is driven at a frequency lower than the threshold value, based on a saturation pressure corresponding to a saturation temperature of refrigerant in indoor heat exchanger 70 and a saturation pressure corresponding to a saturation temperature of refrigerant in outdoor heat exchanger 30.

By providing such a configuration, cold source unit 5, 500 can enhance the accuracy in determining whether or not compressor 10 is driven at a frequency lower than the threshold value.

Preferably, oil return adjusting unit 150 serves as an electronic expansion valve for which a degree of opening of the electronic expansion valve is adjusted in accordance with control by the controller.

By providing such a configuration, cold source unit 5, 500 adjusts the degree of opening of oil return adjusting unit 150 and thereby can adjust the degree of opening of the oil return path depending on whether the air conditioning mode is a cooling mode or a heating mode.

In another aspect, the present disclosure relates to a refrigeration cycle apparatus 1 including a cold source unit 5 and an indoor heat exchanger 70, and a refrigeration cycle apparatus 1000 including a cold source unit 500 and an indoor heat exchanger 70.

It should be understood that the embodiments disclosed herein are illustrative and non-restrictive in every respect. The scope of the present disclosure is defined by the terms of the claims, rather than the description of the above-described embodiments, and is intended to include any modifications within the meaning and scope equivalent to the terms of the claims.

### REFERENCE SIGNS LIST

1, 1000 refrigeration cycle apparatus, 10 compressor, 2, 200 cold source device, 3 load device, 4 refrigerant circuit, 5, 500 cold source unit, 6, 600 controller, 11 suction port, 12 discharge port, 20 four-way valve, 21 first port, 22 second port, 23 third port, 24 fourth port, 30 outdoor heat exchanger, 31 gas header, 32, 71 fan, 40 expansion valve, 50, 150 oil return adjusting unit, 60 capillary tube, 61 processor, 62 memory, 70 indoor heat exchanger, 81, 82, 83, 84, 85, 86, 87, 88, 89, 90, 91, 92 pipe, 101, 102, 103 temperature sensor, 111, 121 suction port, 112, 122 discharge port, 113, 123 extension pipe, 130 check valve.

## Claims

1. A cold source unit connectable to an indoor heat exchanger and provided for a refrigerant circuit, the cold source unit comprising:
a compressor;
an outdoor heat exchanger having a gas header;
an oil return path through which refrigeration oil is returned from the gas header to the compressor;
an oil return adjusting unit configured to adjust a flow rate of the refrigeration oil flowing through the oil return path; and
a controller configured to control the refrigerant circuit, wherein
the controller is configured to
control the oil return adjusting unit to prevent the refrigeration oil from flowing through the oil return path when the compressor is driven at a frequency equal to or higher than a threshold value, and
control the oil return adjusting unit to allow the refrigeration oil to flow through the oil return path when the compressor is driven at a frequency lower than the threshold value.

2. The cold source unit according to claim 1, wherein the controller is configured to control the oil return adjusting unit to alternately repeat a state in which the refrigeration oil flows through the oil return path and a state in which the refrigeration oil does not flow through the oil return path, when the compressor is driven at a frequency lower than the threshold value.

3. The cold source unit according to claim 1, further comprising:
a four-way valve; and
an expansion valve disposed in a path between the outdoor heat exchanger and the indoor heat exchanger, wherein
a communication state inside the four-way valve is switched between a first state and a second state,
in the first state, a suction port of the compressor communicates with the indoor heat exchanger and a discharge port of the compressor communicates with the outdoor heat exchanger, and
in the second state, the suction port of the compressor communicates with the outdoor heat exchanger and the discharge port of the compressor communicates with the indoor heat exchanger, and
the controller is configured to switch the four-way valve from the second state to the first state and switch the expansion valve from an opened state to a closed state and to control the oil return adjusting unit to allow the refrigeration oil to flow through the oil return path, when the four-way valve is in the second state and the compressor is driven at a frequency lower than the threshold value.

4. The cold source unit according to claim 1, wherein the controller is configured to determine whether or not the compressor is driven at a frequency lower than the threshold value, based on a saturation temperature of refrigerant in the indoor heat exchanger and a saturation temperature of refrigerant in the outdoor heat exchanger.

5. The cold source unit according to claim 1, wherein the controller is configured to determine whether or not the compressor is driven at a frequency lower than the threshold value, based on a saturation pressure corresponding to a saturation temperature of refrigerant in the indoor heat exchanger and a saturation pressure corresponding to a saturation temperature of refrigerant in the outdoor heat exchanger.

6. The cold source unit according to claim 1, wherein the oil return adjusting unit serves as an electronic expansion valve for which a degree of opening of the electronic expansion valve is adjusted in accordance with control by the controller.

7. A refrigeration cycle apparatus comprising:
the cold source unit according to any one of claims 1 to 6; and
the indoor heat exchanger.
